# EUROPEAN PATENT APPLICATION

(11) **EP 4 851 042 A1**
(43) Date of publication of application: **09.12.2026**
(21) Application number: 26183280.2
(22) Date of filing: 05.06.2026
(51) Int. Cl.: B64D 1/22, B66C 13/06, B64U 101/67

(54) **SYSTEM FOR CONTROLLING THE OSCILLATIONS OF A SUSPENDED AERIAL LOAD TRANSPORTED BY AN AIRCRAFT AND METHOD FOR OPERATING IT**

(30) Priority: 06.06.2025 IT 202500013201
(71) Applicant: Zephyr Società a Responsabilità Limitata, 47923 Rimini (IT)
(72) Inventor: DE ANGELIS, Emanuele Luigi, 47923 Rimini (IT); TURCI, Matteo, 47923 Rimini (IT); ROSSETTI, Gianluca, 47923 Rimini (IT); GIULIETTI, Fabrizio, 47923 Rimini (IT); AVANZINI, Giulio, 47923 Rimini (IT)
(74) Representative: Botti & Ferrari S.p.A.

(57) **Abstract**

A system (S) for controlling the oscillations of an aerial load (C) suspended from an aircraft (V) by means of a cable (C) of length (F), installable in said aircraft (V) equipped with inertial sensors and with a control unit, comprising a memory unit (M), able to store data and quantities input to said system (S), a control logic unit (U), operatively connected to said memory unit (M), comprising in turn the following processing modules: a first module (1), able to acquire the data coming from said inertial sensors, a second module (2), able to estimate the oscillation angle (*α*, *β*) of said load (C) with respect to a plane that is horizontal to the ground and the oscillation angular velocity (*α̇*, *β̇*) of said load (C) by means of said data acquired by said first module (2) and said quantities stored in said memory unit (M), a third module (3), able to calculate the positioning error (*E_{Px} E_{Py}*) of said load (C) with respect to the vertical of said aircraft (V) and the angular velocity error (*E_{Vx}*, *E_{Vy}*) of said load (C) with respect to said aircraft (V), based on the estimations calculated by said second module (2), and a fourth module (4), able to provide correction commands of the position of said aircraft (V) to said control unit, based on the errors calculated by said third module (3).

## Description

### Field of application

The present invention relates to a system for controlling the oscillations of a suspended aerial load, in particular transported by a manned or unmanned rotary-wing aircraft.

The present invention also relates to the method for operating the system.

In more detail, the invention refers to a control system of the above type, specifically designed and manufactured for the control and subsequent stabilization of the oscillations that are triggered in suspended loads transported by manned or unmanned rotary-wing aircrafts.

Hereafter, the description will be directed to a system for controlling the oscillations of an aerial load transported by an unmanned aircraft, but it is evident that it should not be considered as limited to this specific use.

### Prior art

It is currently known that some goods, especially in fields such as construction, logistics and environmental services, are transported by manned or unmanned rotary-wing aircrafts such as helicopters and drones.

Aircrafts of the UAS (Unmanned Aerial System) type are currently considered as innovative air carriers for transporting goods and lifting loads, able to reduce the costs and risks of the operations in which they are involved.

In general, a load may be transported so that it is rigidly constrained to the vehicle, for example inside a hold, or as a suspended load, transported by ropes.

Depending on the applications, transporting suspended goods by means of ropes may offer different advantages, since it facilitates take-off/landing and load attachment/detachment operations, it frees the operator from having to adapt the UAS structure to the load dimensions or payload, it allows the UAS manoeuvrability to be improved compared to the case of a rigidly constrained load.

These benefits are essential in environmental services and construction, where traditional manned helicopters are already used.

The above-described advantages will be even more marked in the industrial processes related to rural and urban light logistic, also called "last mile", with goods weighting less than 50 kg and distances not exceeding 15 km.

In an urban environment, the ability to deliver goods without landing, and thus taking off, reduces delivery times and removes the need to arrange free city areas used for landing. Moreover, the use of the rope minimizes the interaction between the recipient of the goods and the UAS carrier.

However, the suspended load implies the problem of oscillations that may be triggered and that, if not damped, may get to compromise the security of a mission. In current helicopters, this risk can only be mitigated through the skills of experienced pilots who, without electronic aids, keep the load stabilized.

There are currently no known automatic systems for damping oscillations neither on aircrafts of the UAS type nor on aerial work helicopters.

In view of the drawbacks and unsolved problems of the prior art, the aim of the present invention is to provide a system that is able to control the state of the suspended load and to damp the oscillations if they threaten the aircraft stability.

A further aim of the present invention is to provide a method for operating the system.

Therefore, the technical problem underlying the present invention is to provide a system for controlling the oscillations of a suspended aerial load transported by an unmanned rotary-wing aircraft.

### Summary of the invention

The idea underlying the present invention is to provide a system for controlling the oscillations of a suspended aerial load and a method of operation.

Therefore, the object of the present invention is a system for controlling the oscillations of an aerial load suspended from an aircraft by means of a cable of length, installable in said aircraft equipped with inertial sensors and with a control unit, comprising a memory unit, able to store data and quantities input to said system, a control logic unit, operatively connected to said memory unit, comprising in turn the following processing modules: a first module, able to acquire the data coming from said inertial sensors, a second module, able to estimate the oscillation angle of said load with respect to a plane that is horizontal to the ground and the oscillation angular velocity of said load by means of said data acquired by said first module and said quantities stored in said memory unit, a third module, able to calculate the positioning error of said load with respect to the vertical of said aircraft and the angular velocity error of said load with respect to said aircraft, based on the estimations calculated by said second module, and a fourth module, able to provide correction commands of the position of said aircraft to said control unit, based on the errors calculated by said third module.

Furthermore, according to the invention, said fourth module is able to send said correction commands in the form of longitudinal and lateral velocity set-points: ${V}_{x _ sp} = {E}_{Px} ∗ {K}_{Px} - {E}_{Vx} ∗ {K}_{Vx}$ ${V}_{ν _ sp} = {E}_{P ν} ∗ {K}_{P ν} - {E}_{V ν} ∗ {K}_{V ν}$ where: ${E}_{Px} = 0 - Δ x = - L ∗ sin α$ ${E}_{Vx} = 0 - {v}_{xk} = - {v}_{xt} ∗ cos α = - L ∗ \dot{α} ∗ cos α$ ${E}_{Py} = 0 - Δ y = - L ∗ sin β$ ${E}_{Vy} = 0 - {v}_{yk} = - {v}_{yt} ∗ cos β = - L ∗ \dot{β} ∗ cos β$
***K_{Px}*** being the gain proportional to the longitudinal positioning error of said load;
***K_{Vx}*** being the gain proportional to the longitudinal angular velocity error of the load;
***K_{Py}*** being the gain proportional to the lateral positioning error of said load;
***K_{Vy}*** being the gain proportional to the lateral angular velocity error of said load;
L being the length of said cable;
***α*** being the longitudinal oscillation angle of said load with respect to a plane that is horizontal to the ground;
***α*** being the longitudinal oscillation angular velocity of said load;
***β*** being the lateral oscillation angle of said load with respect to a plane that is horizontal to the ground;
***β*** being the lateral oscillation angular velocity of said load.

Preferably according to the invention, said second module comprises an extended Kalman filter, wherein said aircraft and said load are considered as parts of a pendulum model.

Still according to the invention, said first module is able to receive the aircraft acceleration components from said inertial sensors and to receive the quantities set by the operator, such as the mass of the aircraft, the mass of the load, the length of said cable, from said memory unit.

Yet according to the invention, said first module is able to read the data coming from said inertial sensors at high frequency.

Furthermore, according to the invention, said module is able to estimate the aerodynamic disturbance force based on the aircraft acceleration components acquired by said inertial sensors.

Preferably according to the invention, said system is able to be inserted into the flight control unit of said aircraft as an additional module and to interact with the firmware modules of said aircraft.

Still according to the invention, said system is able to be inserted onto an on-board computer in operating connection with the control unit of said aircraft, via a communication interface.

Yet according to the invention, said communication interface is wired.

A further object of the present invention is a method for operating the system according to any one of the preceding claims, characterized in that it comprises the following steps:
110. acquiring by means of said first module the acceleration components of said aircraft, detected by inertial sensors installed on said aircraft, and the quantities set by the operator in said memory unit, such as the mass of the aircraft, the mass of the load, the length of said cable;
120. estimating the oscillations of said load according to an inertial-type model, by means of said second module;
130. processing stabilization control actions of said aircraft, by means of said third module; and
140. sending said control actions to the control unit of said aircraft through command signals, by means of said fourth module.

### Brief description of the drawings

In the drawings:

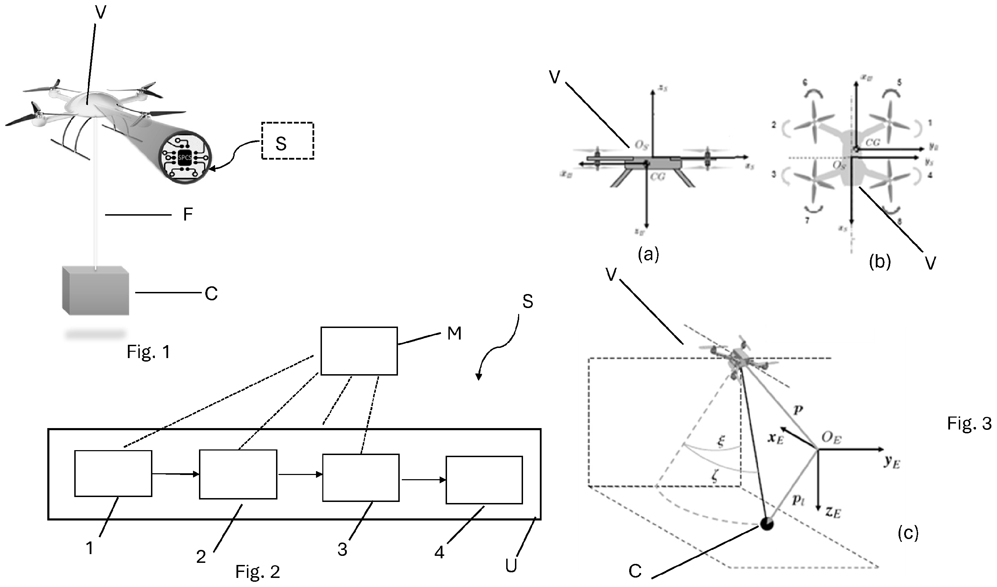

- figure 1 shows a schematic view of the system for controlling the oscillations of a suspended aerial load, which is the object of the present invention;
- figure 2 shows a functional block diagram of the system that is the object of the present invention;
- figure 3a shows a schematic side view of the aircraft modelling implemented by the system;
- figure 3b shows a schematic top view of the aircraft modelling used in the system;
- figure 3c shows a three-dimensional schematic view of the modelling of the aircraft and of the load applied thereto, implemented by the system;

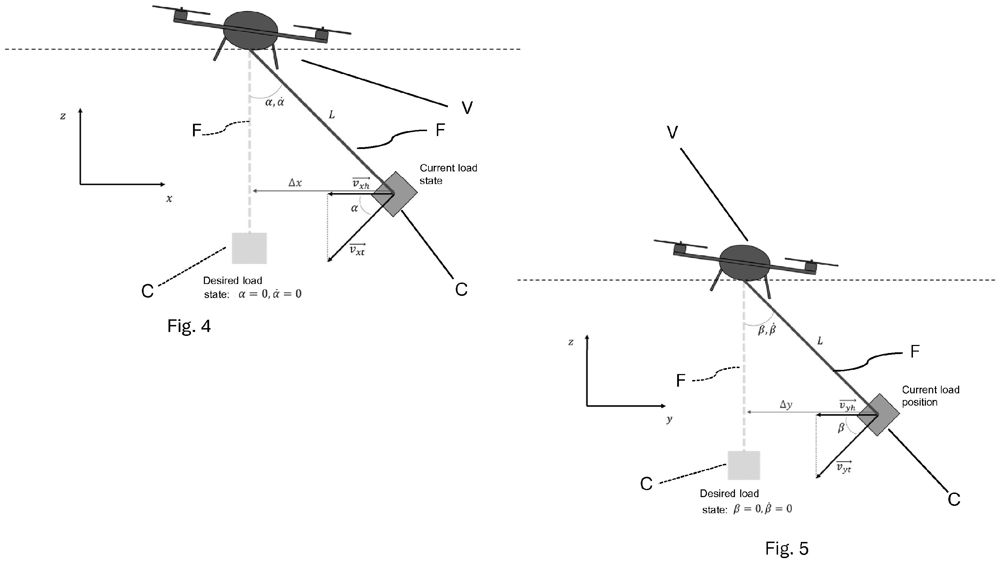

- figure 4 shows a schematic view of the system control action on the aircraft, in a XZ plane;
- figure 5 shows a schematic view of the system control action on the aircraft, in a YZ plane;
- figure 6 shows a block diagram of a first embodiment of the system integration in an airplane;
- figure 7 shows a block diagram of a second embodiment of the system integration in an airplane;
- figure 8 shows a functional diagram of the control law of the longitudinal component of the aircraft flight direction, implemented by the method that is the object of the present invention;
- figure 9 shows a functional diagram of the control law of the vertical component of the aircraft flight direction, implemented by the method that is the object of the present invention; and
- figure 10 shows a block diagram of the method for operating the system, which is the object of the present invention.

### Detailed description

Referring to the attached figures, a system S for controlling the oscillations of an aerial load C, suspended from a rotary-wing aircraft V, by means of a cable F of length L, is shown, that is the object of the present invention.

The system S is integrated on board the aircraft V according to two embodiments.

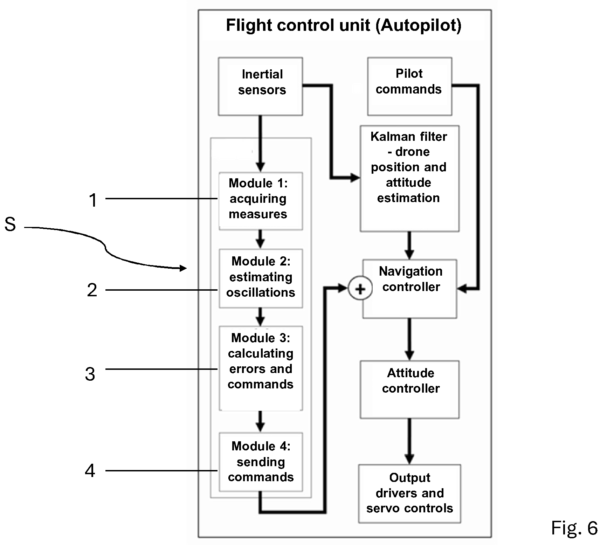

In the first embodiment, shown in particular in figure 6, said system S is inserted into the flight control unit of the aircraft V as an additional module and interacts with the firmware modules of the aircraft V.

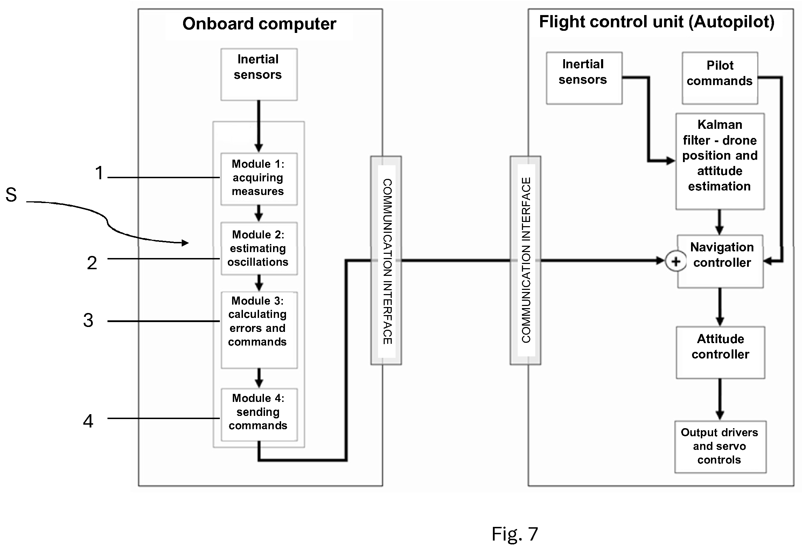

In the second embodiment, shown in particular in figure 7, said system S is inserted onto an on-board computer which is different from the main flight control unit of the aircraft V, in operating connection with the control unit, via a communication interface.

Said communication interface is wired.

Said system S comprises a memory unit M, able to store input data and processed data and a control logic unit U, able to process data and quantities.

Moreover, during the flight operations, the system S may be disabled to control the flight of the aircraft V according to the control logics that are peculiar to the autopilot system of the aircraft V.

The aircraft V may be a manned or unmanned helicopter, or an unmanned drone in a helicopter or multicopter configuration, or any other type of rotary-wing aircraft having stationary flight capabilities, i.e. hovering, and vertical take-off and landing, i.e. Vertical Take-Off and Landing - VTOL.

The control system S is used for manned or unmanned rotary-wing aircrafts V, able to control an aerial load C suspended by means of a cable F and in particular the automatic damping of the oscillations of the load C. The system S is indicated with the acronym SPCS - Sling Payload Control System and is provided with functions required to make a manned or unmanned rotary-wing aircraft V, suitable for carrying out an aerial work with a suspended load C. The primary function of the system S consists in minimizing the oscillatory state of the load C during the flight, by automatically imposing suitable corrective attitude manoeuvres on the aircraft V, such as to damp the oscillations.

The system S does not require the installation of specific sensors for estimating the dynamics of the load C, such as optical sensors or potentiometers, but it uses the acceleration data coming from inertial sensors, such as an accelerometer, that are already mandatorily on board of any aircraft V, since they are necessary for flight control. Besides the data from the inertial sensors, the system S uses data known a priori that do not vary over time, such as the mass Mv of the aircraft V, the mass M_{C} of the load C, the length L of the cable F which the load C is suspended from. These parameters should be loaded by an operator into the memory unit M of the system S, before using the system S itself.

The system S implements an algorithm or mathematical model that describes the dynamics of the aircraft V and of the load C connected to the aircraft. The algorithm implemented by the system S is able to estimate and thus counteract the oscillations of the load C, whether the aircraft V is in hovering, i.e. in stationary flight, or travels in advanced flight.

The aircraft V is considered as a rigid body with three degrees of freedom and the load C is assumed to be connected to the centre of gravity of the aircraft V by means of a cable F of length L that does not vary over time.

The system S is configured to estimate the oscillation dynamics of the load C based on signals acquired by inertial sensors, which provide variable measures in real time during the flight. Moreover, said estimation is based on a series of parameters that remain constant during the flight and that should be defined by the operator before taking off and inserted into the memory unit M of the system S, so that they can be used by the system S itself. These parameters include both the physical features of the oscillating system, represented by the load C suspended from the aircraft V, and the calibration parameters of the control system, which are useful for adjusting the responsiveness and stability of the compensation action of the oscillations of the load C. The parameters defined by the operator are the following:
Mv: mass of the aircraft
M_{C}: mass of the load
***L*:** length of the cable
***K_{Px}*:** gain proportional to the longitudinal positioning error of the load C;
***K_{Vx}*:** gain proportional to the longitudinal angular velocity error of the load C;
***K_{Py}*:** gain proportional to the lateral positioning error of the load C;
***K_{Vy}*:** gain proportional to the lateral angular velocity error of the load C.

The system S comprises the following modules operatively connected with each other, contained in the control logic unit U and operatively connected with the memory unit M. A first module 1 able to acquire the measures from the sensors installed on the aircraft V, a second module 2 able to estimate the oscillations of the load C, a third module 3 able to calculate the position and velocity error of said load C with respect to the vertical of the aircraft V and a fourth module 4 for sending correction commands of the position of said aircraft V, i.e. the command signals sent to the autopilot of the aircraft V which controls the flight thereof based on the received commands.

The first module 1 acquires the signals coming from inertial sensors through a wired connection which is fast and robust. These signals represent the accelerations undergone by the aircraft V during the flight.

The second module 2 comprises an oscillation estimation algorithm, which has the task of estimating the oscillations of the suspended load C, using the data of inertial sensors, the parameters inserted by the operator and the calculated quantities as input.

The second module 2 estimates the oscillations of the load C through an extended Kalman filter, which considers the aircraft V and the load C as parts of a pendulum model.

In particular, starting from the equations of motion of the aircraft V - load C assembly, defined by two point-masses connected by a rigid link, a Kalman filter is able to estimate the oscillation angle of the cable C and the velocity thereof, using the acceleration measures available from the inertial sensors, with no need for additional sensors.

The modelling is of the non-linear type, so as to reduce the errors of a linear-type modelling and ensure a greater accuracy also in unsteady flight conditions and agile manoeuvres. The filter performance is improved taking into consideration the aerodynamic disturbance force, or aerodynamic resistance, whose estimation is crucial in forward flight or in wind conditions. The aerodynamic disturbance force is estimated by the filter based on the horizontal accelerations acquired by the inertial sensors.

The quantities estimated by said second module are the following:
***α*:** longitudinal oscillation angle of the load C with respect to a plane that is horizontal to the ground;
***α***: longitudinal oscillation angular velocity of the load C;
***β*:** lateral oscillation angle of the load C with respect to a plane that is horizontal to the ground;
***β*:** lateral oscillation angular velocity of the load C.

Said third module 3 processes the control actions of the attitude of the aircraft V to minimize the oscillations of the load C. Said third module 3 receives as inputs the estimations of the oscillations of the load C calculated in the second module 2, expressed in terms of angle and angular velocity. With these inputs, the positioning error of the load C with respect to the vertical of the aircraft V and the horizontal velocity error of the load C with respect to the aircraft V are respectively calculated, i.e. the following quantities are calculated.

By means of the data detected by the sensors, the control logic unit U calculates the following quantities:
**Δ*x*:** longitudinal displacement of the load C
**Δ*y*:** lateral displacement of the load C
***E_{Px}*:** longitudinal positioning error of the load C
***E_{Vx}*:** longitudinal angular velocity error of the load C
***E_{Py}*:** lateral positioning error of the load C
***E_{Vy}*:** longitudinal angular velocity error of the load C
***vₓₜ*:** tangential velocity of the load C with respect to the x-z plane
***vₓₖ*:** horizontal component of the tangential velocity ***vₓₜ***
***v_{yt}*:** tangential velocity of the load with respect to the y-z plane
***v_{yk}*:** horizontal component of the tangential velocity ***v_{yt}***

When controlling the aircraft V, the system S follows a method according to a PD (Proportional-Derivative) architecture, combining two output components, the proportional component P is a control action proportional to the positioning error and the derivative component is a derivative control action D with respect to the positioning error, that is proportional to the horizontal velocity.

This control system may be considered as a Stability Augmentation System - SAS, as it operates with constantly zero references.

The sum of the two contributions P and D allows the North-East velocity set-points to be obtained as outputs, which are sent to the UAS primary autopilot.

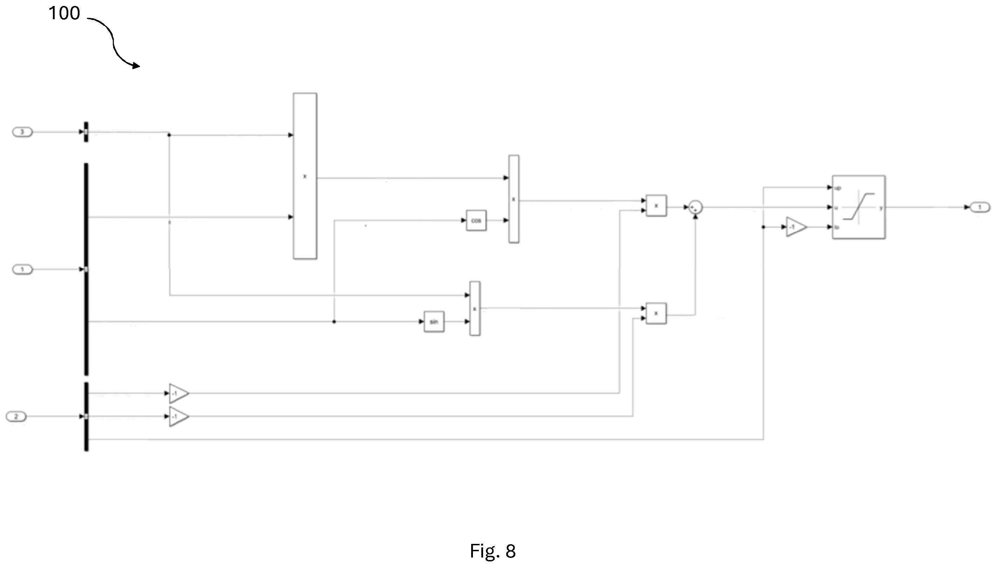

In particular, as shown in figure 8, said third module 3 calculates the following corrective actions in the form of longitudinal and lateral velocity set-points, i.e. the velocity at which the aircraft V should move so that the load C stabilizes and sends these corrective actions to said fourth module 4, which in turn transmits them to the autopilot of the aircraft V which has the task of implementing them.

The calculated corrective actions are the following: ${V}_{x _ sp} = {E}_{Px} ∗ {K}_{Px} - {E}_{Vx} ∗ {K}_{Vx}$ ${V}_{ν _ sp} = {E}_{Pν} ∗ {K}_{P ν} - {E}_{V ν} ∗ {K}_{V ν}$ where: ${E}_{Px} = 0 - Δ x = - L ∗ sin α$ ${E}_{Vx} = 0 - {v}_{xk} = - {v}_{xt} ∗ cos α = - L ∗ \dot{α} ∗ cos α$ ${E}_{Py} = 0 - Δ y = - L ∗ sin β$ ${E}_{Vy} = 0 - {v}_{yk} = - {v}_{yt} ∗ cos β = - L ∗ \dot{β} ∗ cos β$

The contributions ***E*_{*Px* *} *K_{Px}*** and ***E*_{*Py* *} *K_{Py}*** represent control actions proportional to the respective displacement errors of the load C, through which the aircraft V tracks the position of the load, tending to position itself on the vertical of the latter.

The contributions ***E*_{*Vx* *} *K_{Vx}*** and ***E*_{*Vy* *} *K_{Vy}*** represent derivative damping actions on the oscillating load C, through which the aircraft V tends to move in the direction of the horizontal velocities ***vₓₖ*** and ***v_{yk}*.**

The operation of the system S for controlling the oscillations of a suspended aerial load C transported by an aircraft V, which is the object of the present invention, occurs according to the following method of operation.

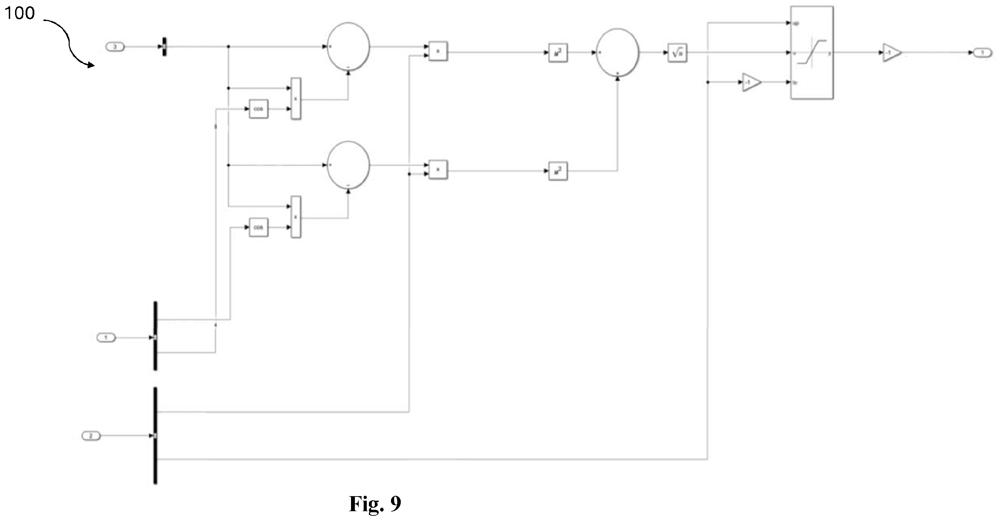

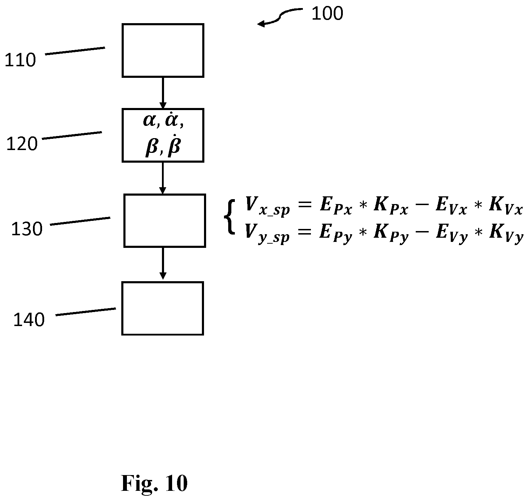

Referring to figures 8-10, the method 100 for operating the system S comprises the following steps.

In a data acquisition step 110, the data detected by inertial sensors installed on the aircraft V and quantities set by the operator are provided as inputs to the system S.

In an estimation step 120, the load oscillations are estimated according to an inertial-type model.

Using the data detected by the inertial sensors, the weight of the unloaded aircraft V, the weight of the load C and the length L of the cable F and the data from the inertial sensors, the oscillations of the load C are estimated.

In particular, the oscillation estimation model is an extended Kalman filter, which, starting from the equations of motion of the aircraft V - load C assembly, defined by two point-masses connected by a rigid link, estimates the oscillation angle of the cable C and the velocity thereof.

As described above, the estimated quantities are the longitudinal oscillation angle ***α*,** the longitudinal oscillation angular velocity ***α***, the lateral oscillation angle ***β*** and the lateral oscillation angle ***β*.**

In a control action processing step 130, starting from the data estimated in step 120, control actions of the attitude of the aircraft V are calculated to minimize the oscillations of the load C. In particular, the positioning error of the load C with respect to the vertical of the aircraft V and the horizontal velocity error of the load C with respect to the aircraft V are respectively calculated, in particular:
**Δ*x*:** longitudinal displacement of the load C
**Δ*y*:** lateral displacement of the load C
***E_{Px}*:** longitudinal positioning error of the load C
***E_{Vx}*:** longitudinal angular velocity error of the load C
***E_{Py}*:** lateral positioning error of the load C
***E_{Vy}*:** longitudinal angular velocity error of the load C
***vₓₜ*:** tangential velocity of the load C with respect to the x-z plane
***vₓₖ*:** horizontal component of the tangential velocity ***vₓₜ***
***v_{yt}*:** tangential velocity of the load with respect to the y-z plane
***v_{yk}*:** horizontal component of the tangential velocity ***v_{yt}***

In particular, in said step 130, the following corrective actions are calculated in the form of longitudinal and lateral velocity set-points, to be send to the aircraft V: ${V}_{x _ sp} = {E}_{Px} ∗ {K}_{Px} - {E}_{Vx} ∗ {K}_{Vx}$ ${V}_{ν _ sp} = {E}_{P ν} ∗ {K}_{P ν} - {E}_{V ν} ∗ {K}_{V ν}$ where: ${E}_{Px} = 0 - Δ x = - L ∗ sin α$ ${E}_{Vx} = 0 - {v}_{xk} = - {v}_{xt} ∗ cos α = - L ∗ \dot{α} ∗ cos α$ ${E}_{Py} = 0 - Δ y = - L ∗ sin β$ ${E}_{Vy} = 0 - {v}_{yk} = - {v}_{yt} ∗ cos β = - L ∗ \dot{β} ∗ cos β$

The contributions ***E*_{*Px* *} *K_{Px}*** and ***E*_{*Py* *} *K_{Py}*** represent control actions proportional to the respective displacement errors of the load C, through which the aircraft V tracks the position of the load, tending to position itself on the vertical of the latter.

The contributions ***E*_{*Vx* *} *K_{Vx}*** and ***E*_{*Vy* *} *K_{Vy}*** represent derivative damping actions on the oscillating load C, through which the aircraft V tends to move in the direction of the horizontal velocities ***vₓₖ*** and ***v_{yk}*.**

Therefore, the control logic unit U sends these command signals to the firmware of the aircraft V, so that the airplane V can implement the stabilization corrective actions.

As it is evident from the above description, the main advantages of the system and method that are the objects of the present invention are the minimized interaction between the aircraft and the load, since there is no need either to adapt the aircraft to the load shapes, or to install additional sensors thereon, besides those normally used by the flight control units.

A further advantage is given by the scalability of the system which can work on any type of rotary-wing aircraft i.e. helicopter, drone in a helicopter or multirotor configuration and regardless of the weight and size thereof, by applying a parameter calibration and with no need to modify the basic method.

Obviously, in order to meet contingent and specific requirements, a person skilled in the art will be allowed to bring several modifications and alternatives to the above-described support, all however falling within the scope of protection of the invention as defined by the following claims.

## Claims

1. A system (S) for controlling the oscillations of an aerial load (C) suspended from an aircraft (V) by means of a cable (C) of length (F), installable in said aircraft (V) equipped with inertial sensors and a control unit, comprising:
a memory unit (M), able to store data and quantities input to said system (S);
a control logic unit (U), operatively connected to said memory unit (M), comprising in turn the following processing modules:
a first module (1), able to acquire the data coming from said inertial sensors;
a second module (2), able to estimate the oscillation angle **(*α*, *β*)** of said load (C) with respect to a plane that is horizontal to the ground and the oscillation angular velocity (***α***, ***β***) of said load (C) by means of said data acquired by said first module (2) and said quantities stored in said memory unit (M);
a third module (3), able to calculate the positioning error **(*E_{Px} E_{Py}*)** of said load (C) with respect to the vertical of said aircraft (V) and the angular velocity error **(*E_{Vx}*, *E_{Vy}*)** of said load (C) with respect to said aircraft (V), based on the estimations calculated by said second module (2); and
a fourth module (4), able to provide correction commands of the position of said aircraft (V) to said flight control unit, based on the errors calculated by said third module (3).

2. The system (S) according to the preceding claim, **characterized in that** said fourth module (4) is able to send said correction commands in the form of longitudinal and lateral velocity set-points: ${V}_{x _ sp} = {E}_{Px} ∗ {K}_{Px} - {E}_{Vx} ∗ {K}_{Vx}$ ${V}_{ν _ sp} = {E}_{Pν} ∗ {K}_{Pν} - {E}_{Vν} ∗ {K}_{Vν}$ where: ${E}_{Px} = 0 - Δ x = - L ∗ sin α$ ${E}_{Vx} = 0 - {v}_{xk} = - {v}_{xt} ∗ cos α = - L ∗ \dot{α} ∗ cos α$ ${E}_{Py} = 0 - Δ y = - L ∗ sin β$ ${E}_{Vy} = 0 - {v}_{yk} = - {v}_{yt} ∗ cos β = - L ∗ \dot{β} ∗ cos β$
***K_{Px}*** being the gain proportional to the longitudinal positioning error of said load (C);
***K_{Vx}*** being the gain proportional to the longitudinal angular velocity error of the load (C);
***K_{Py}*** being the gain proportional to the lateral positioning error of said load (C);
***K_{Vy}*** being the gain proportional to the lateral angular velocity error of said load (C);
L being the length of said cable (F);
***α*** being the longitudinal oscillation angle of said load (C) with respect to a plane that is horizontal to the ground;
***α*** being the longitudinal oscillation angular velocity of said load (C);
***β*** being the lateral oscillation angle of said load (C) with respect to a plane that is horizontal to the ground;
***β*** being the lateral oscillation angular velocity of said load (C).

3. The system (S) according to any one of the preceding claims, **characterized in that** said second module (2) comprises an extended Kalman filter, wherein said aircraft (V) and said load (C) are considered as parts of a pendulum model.

4. The system (S) according to any one of the preceding claims, **characterized in that** said first module (1) is able to receive the acceleration components of the aircraft (V) from said inertial sensors and to receive the quantities set by the operator, such as the mass (Mv) of the aircraft (V), the mass (M_{C}) of the load C, the length (L) of said cable (F), from said memory unit (M).

5. The system (S) according to any one of the preceding claims, **characterized in that** said first module (1) is able to read the data coming from said inertial sensors at high frequency.

6. The system (S) according to any one of the preceding claims, **characterized in that** said module (2) is able to estimate the aerodynamic disturbance force based on the acceleration components of the aircraft (V) acquired by said inertial sensors.

7. The system (S) according to any one of the preceding claims, **characterized in that** said system (S) is able to be inserted into the flight control unit of said aircraft (V) as an additional module and to interact with the firmware modules of said aircraft (V).

8. The system (S) according to any one of claims 1-7, **characterized in that** said system (S) is able to be inserted onto an on-board computer in operating connection with the flight control unit of said aircraft (V), via a communication interface.

9. The system according to the preceding claim, **characterized in that** said communication interface is wired.

10. A method (100) for operating the system (S) according to any one of the preceding claims 1-9, **characterized in that** it comprises the following steps:
110. acquiring by said first module (1) the acceleration components of said aircraft (V), detected by means of inertial sensors installed on said aircraft (V), and the quantities set by the operator in said memory unit (M) such as the mass (Mv) of the aircraft (V), the mass (M_{C}) of the load (C), the length (L) of said cable (F);
120. estimating the oscillations **(*α*, *α*, *β*, *β*)** of said load (C) according to an inertial type model, by means of said second module (2);
130. processing stabilization control actions of said aircraft (V), by means of said third module (3); and
140. sending said control actions to the control unit of said aircraft (V) through command signals, by means of said fourth module (4).
